# EUROPEAN PATENT APPLICATION

(11) **EP 4 120 120 A1**
(43) Date of publication of application: **18.01.2023**
(21) Application number: 21802924.7
(22) Date of filing: 16.04.2021
(51) Int. Cl.: G06K 9/00, G06F 3/0484, A47L 11/24

(54) **METHOD AND APPARATUS FOR OBTAINING CLEANING PATH OF CLEANING DEVICE, AND STORAGE MEDIUM**

(30) Priority: 11.05.2020 CN 202010391793; 11.05.2020 CN 202010391796
(71) Applicant: Dreame Innovation Technology (Suzhou) Co., Ltd., Suzhou, Jiangsu 215104 (CN)
(72) Inventor: WANG, Fei, Suzhou, Jiangsu 215104 (CN); MENG, Jia, Suzhou, Jiangsu 215104 (CN); ZHANG, Xiaojun, Suzhou, Jiangsu 215104 (CN)
(74) Representative: dompatent von Kreisler Selting Werner - Partnerschaft von Patent- und Rechtsanwälten mbB
(86) International application number: PCT/CN2021/087890
(87) International publication number: WO 2021/227777

(57) **Abstract**

A method, a device and a storage medium for obtaining a cleaning path of a cleaning device are disclosed. The method can solve a problem that a mobile terminal cannot provide a path for the cleaning device to clean a room, by displaying an image of a working area of the cleaning device, the image of the working area including a plurality of images of sub-working areas; receiving a sequence setting operation acting on the images of the sub-working areas; obtaining a cleaning sequence indicated by the sequence setting operation; and displaying the cleaning path corresponding to the cleaning sequence so as to control the cleaning device. Since the cleaning sequence desired by the user can be obtained, and the cleaning path can be generated according to the cleaning sequence, the effect of providing the user with the cleaning device to clean the room can be achieved.

## Description

### CROSS-REFERENCE TO RELATED APPLICATIONS

This patent application claims priority of a Chinese Patent Application No. 202010391793.X, filed on May 11, 2020, and a Chinese Patent Application No. 202010391796.3, filed on May 11, 2020, the entire content of which is incorporated herein by reference.

### TECHNICAL FIELD

The present application relates to a method, a device and a storage medium for obtaining a cleaning path of a cleaning device, which belongs to a technical field of computers.

### BACKGROUND

Cleaning devices (such as sweeping robots, etc.) are mainly used to clean the ground, and are usually used in indoor scene cleaning environments. The cleaning device includes a cleaning module and a driving module. Under the work of the driving module, the cleaning device moves and cleans the ground.

In the prior art, it is possible for a user to set a specific cleaning plan for a room to be cleaned through a mobile terminal. For example, the user selects the room to be cleaned through the mobile terminal. However, the mobile terminal cannot provide a path for the cleaning device to clean the room.

### SUMMARY

The present application provides a method, a device and a storage medium for obtaining a cleaning path of a cleaning device, which can solve the problem that a mobile terminal cannot provide a path for a cleaning device to clean a room. The present application provides the following technical solutions.

In a first aspect, a method for obtaining a cleaning path of a cleaning device is provided, and the method includes:
displaying an image of a working area of the cleaning device, the image of the working area including a plurality of images of sub-working areas;
receiving a sequence setting operation acting on the images of the sub-working areas;
obtaining a cleaning sequence indicated by the sequence setting operation; and
displaying the cleaning path corresponding to the cleaning sequence so as to control the cleaning device to clean in the working area according to the cleaning path.

Optionally, receiving the sequence setting operation acting on the images of the sub-working areas, includes:
receiving a cleaning trajectory drawing operation acting on the image of the working area; and
displaying a cleaning trajectory indicated by the cleaning trajectory drawing operation is displayed on the image of the working area; wherein
obtaining the cleaning sequence indicated by the sequence setting operation, includes:
   determining a sequence of the cleaning trajectory passing through the image of each sub-working area as the cleaning sequence of the cleaning device.

Optionally, receiving the sequence setting operation acting on the images of the sub-working areas, includes:
receiving a selection operation acting on the plurality of imaged of the sub-working areas;
displaying area information of target sub-working areas indicated by the selection operation; and
receiving the setting operation of each area information; and wherein
obtaining the cleaning sequence indicated by the sequence setting operation, includes:
   obtaining the cleaning sequence of target sub-working areas corresponding to the each area information indicated by the setting operation.

Optionally, receiving the setting operation of each area information, includes:
for each area information, displaying a corresponding sequence selection window based on a display position of the area information; the sequence selection window being used to display a selectable cleaning sequence of the target sub-working areas corresponding to the area information; and
receiving a sequence selection operation acting on the sequence selection window.

Optionally, receiving the setting operation of each area information, includes:
for each area information, displaying a corresponding sequence adjustment control based on the display position of the area information; and
receiving a trigger operation acting on the sequence adjustment control, the sequence adjustment control being used to determine the cleaning sequence of corresponding target sub-working areas based on the number of executions of the trigger operation.

Optionally, receiving the setting operation of each area information, includes:
receiving a drag operation acting on each area information; and wherein after the drag operation is completed, a sequence of the area information is the cleaning sequence of the cleaning device.

Optionally, receiving the sequence setting operation acting on the images of the sub-working areas, includes:
displaying the cleaning sequence of the images of the sub-working areas which have been sequenced; and
receiving a sequence adjustment operation of the cleaning sequence, and displaying the cleaning sequence after being adjusted; and/or, receiving a deletion operation for the cleaning sequence of the images of the sub-working areas in the set sequence.

In a second aspect, a device for obtaining a cleaning path of a cleaning device is provided, and the device includes:
an image display module, the image display module being used to display an image of a working area of the cleaning device, the image of the working area including a plurality of images of sub-working areas;
an operation receiving module, the operation receiving module being used to receive a sequence setting operation acting on the images of the sub-working areas;
a sequence obtaining module, the sequence obtaining module being used to obtain a cleaning sequence indicated by the sequence setting operation; and
a trajectory display module, the trajectory display module being used to display the cleaning path corresponding to the cleaning sequence, so as to control the cleaning device to clean in the working area according to the cleaning path.

In a third aspect, a device for obtaining a cleaning path of a cleaning device is provided, wherein the device includes a processor and a memory in which a program is stored; and wherein the program is loaded and executed by the processor to implement a method for obtaining the cleaning path of the cleaning device according to the first aspect.

In a fourth aspect, a computer-readable storage medium is provided, wherein a program is stored in the storage medium; and wherein when the program is executed by a processor, the program is used to implement a method for obtaining the cleaning path of the cleaning device according to the first aspect.

The beneficial effects of the present application are: by displaying an image of a working area of the cleaning device, the image of the working area including a plurality of images of sub-working areas; receiving a sequence setting operation acting on the images of the sub-working areas; obtaining a cleaning sequence indicated by the sequence setting operation; and displaying the cleaning path corresponding to the cleaning sequence so as to control the cleaning device to clean in the working area according to the cleaning path; the present disclose can solve the problem that the mobile terminal cannot provide a path for the cleaning device to clean the room. Since the cleaning sequence desired by the user can be obtained, and the cleaning path can be generated according to the cleaning sequence, the effect of providing the user with a cleaning device to clean the room can be achieved.

In addition, since the cleaning sequence can be customized and adjusted by the user, the correspondingly generated cleaning path can also be customized, thereby improving the flexibility of generating the cleaning path.

In a fifth aspect, a method for obtaining a cleaning path of a cleaning device is provided, and the method includes:
displaying an image of a working area of the cleaning device, the image of the working area including a plurality of images of sub-working areas;
receiving an area selection operation acting on the images of the sub-working areas;
displaying n types of recommended cleaning sequences, each recommended cleaning sequence being a cleaning sequence of target sub-working areas indicated by the area selection operation, a value of n being a positive integer;
receiving a sequence selection operation acting on a target cleaning sequence among the n types of recommended cleaning sequences; and
displaying the cleaning path corresponding to the target cleaning sequence so as to control the cleaning device to clean in the working area according to the cleaning path.

Optionally, before displaying the n types of recommended cleaning sequences, the method further includes:
generating n types of recommended cleaning sequences for the target sub-working areas based on a preset sequence generation strategy.

Optionally, generating the n types of recommended cleaning sequences for the target sub-working areas based on the preset sequence generation strategy, includes:
determining cleaning time of the target sub-working areas under different cleaning sequences; and
determining α cleaning sequences with shortest cleaning time in each cleaning sequence as the recommended cleaning sequence, a value of α being a positive integer, and α≤, n.

Optionally, generating the n types of recommended cleaning sequences for the target sub-working areas based on the preset sequence generation strategy, includes:
determining cleaning paths of the target sub-working areas under different cleaning sequences; and
determining b cleaning sequences with shortest cleaning path in each cleaning sequence as the recommended cleaning sequence, a value of b being a positive integer, and b≤ n.

Optionally, generating n types of recommended cleaning sequences for the target sub-working areas based on a preset sequence generation strategy, includes:
determining historical cleaning sequences and historical cleaning times of the target sub-working areas; and
generating the recommended cleaning sequence based on the historical cleaning sequences and the historical cleaning times.

Optionally, generating the recommended cleaning sequence based on the historical cleaning sequences and the historical cleaning times, includes:
obtaining frontmost cleaning sequences in the historical cleaning sequences of target sub-working areas;
sorting the target sub-working areas from front to back according to the frontmost cleaning sequences;
for the target sub-working areas with the same sort sequence, sorting them according to sequence of historical cleaning times from most to least; and
determining an obtained sort sequence as the recommended cleaning sequence.

Optionally, before displaying the cleaning path corresponding to the target cleaning sequence, the method further includes:
generating a cleaning path corresponding to the target cleaning sequence based on a path generation strategy; and
wherein the path generation strategy is a strategy with the shortest path, a strategy with the shortest time-consuming, or a strategy randomly generated.

In a sixth aspect, a device for obtaining a cleaning path of a cleaning device is provided, and the device includes:
a display module, the display module being used to display an image of a working area of the cleaning device, the image of the working area including a plurality of images of sub-working areas; and
a human-computer interaction module, the human-computer interaction module being used to receive an area selection operation acting on the images of the sub-working areas;
wherein the display module is also used to display n types of recommended cleaning sequences, each recommended cleaning sequence is a cleaning sequence of target sub-working areas indicated by the area selection operation, and a value of n is a positive integer;
wherein the human-computer interaction module is further used to receive a sequence selection operation acting on a target cleaning sequence among the n types of recommended cleaning sequences; and
wherein the display module is also used to display the cleaning path corresponding to the target cleaning sequence, so as to control the cleaning device to clean in the working area according to the cleaning path.

In a seventh aspect, a device for obtaining a cleaning path of a cleaning device is provided, wherein the device includes a processor and a memory in which a program is stored; and wherein the program is loaded and executed by the processor to implement a method for obtaining the cleaning path of the cleaning device according to the first aspect.

In an eighth aspect, a computer-readable storage medium is provided, wherein a program is stored in the storage medium; and wherein when the program is executed by a processor, the program is used to implement a method for obtaining the cleaning path of the cleaning device according to the first aspect.

The beneficial effects of the present application are: by displaying an image of a working area of the cleaning device, the image of the working area including a plurality of images of sub-working areas; receiving an area selection operation acting on the images of the sub-working areas; displaying n types of recommended cleaning sequences, each recommended cleaning sequence being a cleaning sequence of target sub-working areas indicated by the area selection operation, a value of n being a positive integer; receiving a sequence selection operation acting on a target cleaning sequence among the n types of recommended cleaning sequences; and displaying the cleaning path corresponding to the target cleaning sequence so as to control the cleaning device to clean in the working area according to the cleaning path; the present application can solve the problem that the mobile terminal cannot provide a sequential path for the cleaning device to clean the room. Since the cleaning sequence can be recommended to the user, and the cleaning path can be generated according to the cleaning sequence selected by the user, the present application can achieve the effect of providing the user with a cleaning device to clean the room.

The above description is only an overview of the technical solutions of the present application. In order to understand the technical means of the present application more clearly, and can be implemented in accordance with the content of the specification, preferred embodiments of the present application are described in detail below in conjunction with the accompanying drawings.

### BRIEF DESCRIPTION OF DRAWINGS

FIG. 1 is a flowchart of a method for obtaining a cleaning path of a cleaning device provided by an embodiment of the present application;
FIG. 2 is a schematic diagram of a cleaning sequence obtaining process of a cleaning device provided by an embodiment of the present application;
FIG. 3 is a schematic diagram of a cleaning sequence obtaining process of a cleaning device provided by another embodiment of the present application;
FIG. 4 is a schematic diagram of a cleaning sequence obtaining process of a cleaning device provided by another embodiment of the present application;
FIG. 5 is a schematic diagram of a cleaning sequence obtaining process of a cleaning device provided by another embodiment of the present application;
FIG. 6 is a schematic diagram of a cleaning sequence obtaining process of a cleaning device provided by another embodiment of the present application;
FIG. 7 is a schematic diagram of a cleaning sequence obtaining process of a cleaning device provided by another embodiment of the present application;
FIG. 8 is a block diagram of a cleaning path obtaining device of a cleaning device provided by an embodiment of the present application;
FIG. 9 is a flowchart of a method for obtaining a cleaning path of a cleaning device according to an embodiment of the present application;
FIG. 10 is a schematic diagram of a process of displaying n types of recommended cleaning sequences provided by an embodiment of the present application;
FIG. 11 is a schematic diagram of a process of selecting a target cleaning sequence provided by an embodiment of the present application;
FIG. 12 is a block diagram of a device for obtaining a cleaning path of a cleaning device according to an embodiment of the present application; and
FIG. 13 is a block diagram of a device of obtaining a cleaning path of a cleaning device provided by an embodiment of the present application.

### DETAILED DESCRIPTION

The specific embodiments of the present application will be described in further detail below in conjunction with the accompanying drawings and implementations. The following embodiments are used to illustrate the present application, but are not used to limit the scope of the present application.

Optionally, the present application takes an electronic device as an execution subject of each embodiment as an example for description. The electronic device controls the cleaning device. The cleaning device may be a device with an automatic cleaning function such as a sweeping robot. The electronic device can be a mobile phone, a tablet computer, a wearable device, a computer, a notebook computer, or the like. The present application does not limit the types of electronic devices and cleaning devices.

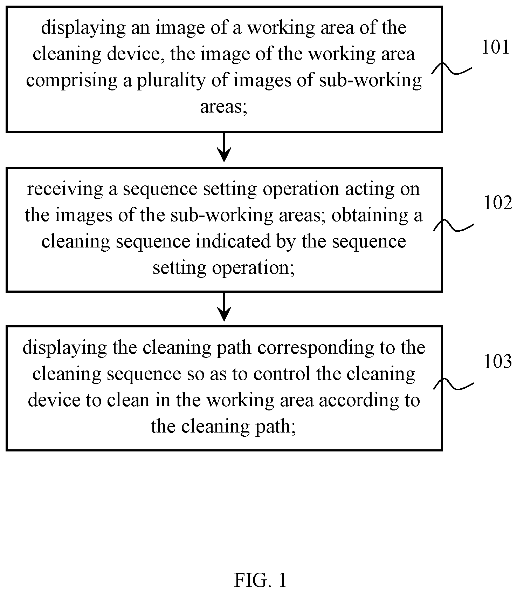

FIG. 1 is a flowchart of a method of obtaining a cleaning path of a cleaning device provided by an embodiment of the present application. The method includes at least the following steps.

Step 101: displaying an image of a working area of the cleaning device. The image of the working area includes a plurality of imaged of sub-working areas.

The image of the working area refers to an image of a working area that the cleaning device controlled by the electronic device needs to clean. The image of the working area is pre-stored in the electronic device. In other embodiments, the working area image may also be referred to as a working map, a room map etc. This embodiment does not limit the name of the image of the working area.

In the present application, the image of the working area includes a plurality of images of sub-working areas. Each image of sub-working area is an image corresponding to a part of the working area. For example, if the image of the working area is a room, the images of the sub-working areas may include images of a first bedroom, a second bedroom, a dining room, a balcony, etc., in the room.

The sub-working areas in the working area may be divided by the user; or automatically generated by the electronic device. This embodiment does not limit the way of dividing the sub-working areas.

In addition, the image of the working area can be a two-dimensional image (for example: a top view of a room) or a three-dimensional image. This embodiment does not limit the presentation form of the image of the working area.

Optionally, the electronic device displays a partition display control of the image of the working area on the display interface. When a trigger operation acting on the partition display control is received, the image of the sub-working areas are partitioned and displayed in the image of the working area.

Step 102, displaying an image of a working area of the cleaning device, the image of the working area comprising a plurality of images of sub-working areas; and receiving a sequence setting operation acting on the images of the sub-working areas;

Optionally, in this embodiment, the solutions for obtaining the cleaning sequence by the electronic device include but are not limited to the following:

A first type: receiving the cleaning trajectory drawing operation acting on the image of the working area; and displaying the cleaning trajectory indicated by the cleaning trajectory drawing operation on the image of the working area. At this time, the sequence setting operation includes the cleaning trajectory drawing operation.

Correspondingly, obtaining the cleaning sequence indicated by the sequence setting operation, includes: determining the sequence of the images of the cleaning trajectory passing through each sub-working area as the cleaning sequence of the cleaning device.

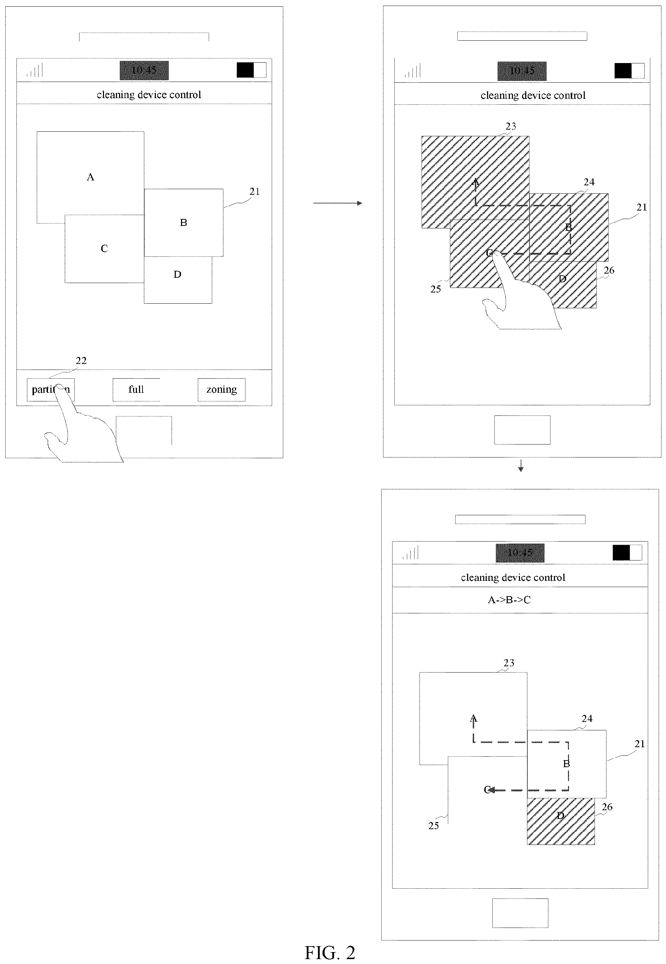

For example, referring to FIG. 2, taking the image of the working area as a room image 21 as an example, the user manually clicks the partition control 22 on the room image 21. Correspondingly, the electronic device receives a trigger operation acting on the partition control 22. In the room image 21, the images 23, 24, 25, 26 of each sub-working area are displayed in sections. The electronic device receives the cleaning trajectory drawing operation performed by the user on the image of each sub-working area so as to obtain the cleaning trajectory. The sequence in which the cleaning trajectory (indicated by the dashed arrow) passes through the image of each sub-working area is the cleaning sequence. At the same time, the electronic device marks the corresponding cleaning sequence on the image of each sub-working area.

Optionally, when the electronic device allows the user to operate the images of the sub-working areas, the images of the sub-working areas are displayed in a preset display mode to prompt the user that the images of the corresponding sub-working areas support operation, for example: the images of the sub-working areas shown in the shaded part in FIG. 2. Optionally, the preset display mode includes, but is not limited to: display in a specific color and/or a specific pattern, which is not limited in this embodiment.

A second type: receiving a selection operation acting on the images of the plurality of sub-working areas; displaying area information of the target sub-working area indicated by the selection operation; receiving setting operations for each area information. At this time, the sequence setting operation includes a selection operation and a setting operation.

Correspondingly, obtaining the cleaning sequence indicated by the sequence setting operation, includes: obtaining the cleaning sequence of the target sub-working area corresponding to each area information indicated by the setting operation.

In the second obtaining solution of the cleaning sequence, the user firstly selects the image of the target sub-working area that needs to be cleaned from the images of the plurality of sub-working areas. Then, the cleaning sequence of the target sub-working area corresponding to the image of the target sub-working area is set.

Optionally, the selection operation acting on the images of the plurality of sub-working areas, includes but not limited to: a single-click operation, a double-click operation, a long-press operation, etc., which is not limited in the present embodiment.

In the second obtaining solution of the cleaning sequence, the setting operation of each area information is received, including but not limited to the following scenarios:

A first scenario: for each area information, a corresponding sequence selection window is displayed based on the display position of the area information, and the sequence selection window is used to display the selectable cleaning sequence of the target sub-working area corresponding to the area information; and the sequence selection operation acting on the sequence selection window is received. At this time, the setting operation includes a sequence selection operation.

Correspondingly, the cleaning sequence of each target sub-working area obtained by the electronic device is selected by the user in the sequence selection window.

Optionally, the sequence selection window is represented by a drop-down box.

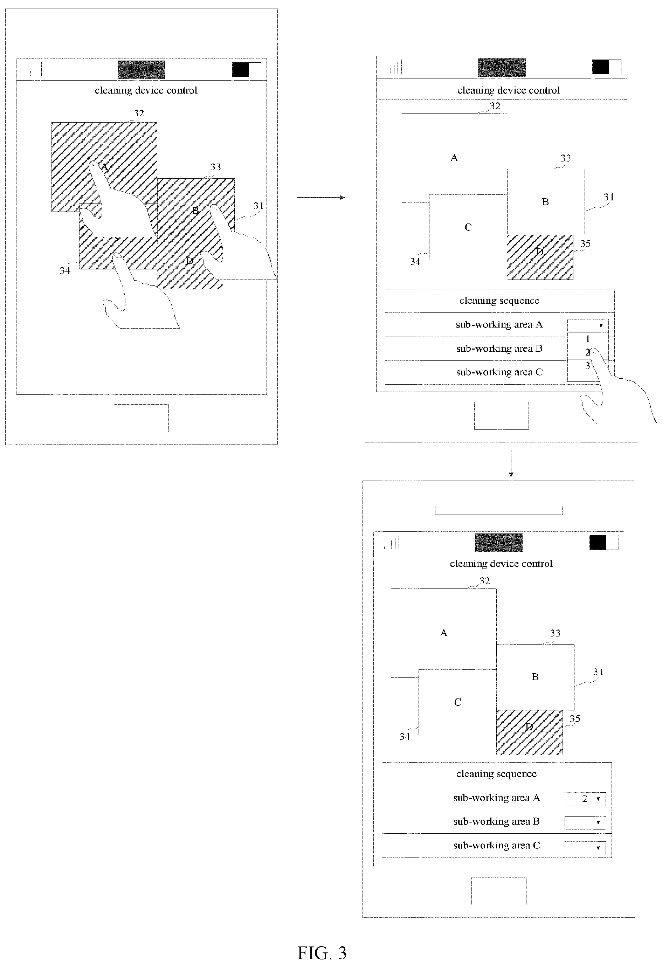

Referring to FIG. 3, take the image of the working area as a room image 31 as an example. In the room image 31, the images 32, 33, 34, 35 of the respective sub-working areas are displayed in sections. The electronic device receives the user's selection operation on the images 32, 33, 34 of the sub-working areas so as to obtain the target sub-working area. The electronic device displays the image of the target sub-working area in a preset display mode, and displays the area information of the target sub-working area. A drop-down box is displayed in the display area of each area information. The electronic device receives the sequence selection operation on the drop-down box 36 corresponding to the area information of the image 32 of the target sub-working area, and determines that the cleaning sequence of the image 32 of the target sub-working area is 2.

A second scenario: for each area information, displaying the corresponding sequence adjustment control based on the display position of the area information; and receiving the trigger operation acting on the sequence adjustment control. The sequence adjustment control is used to determine the cleaning sequence of the corresponding target sub-working area based on the execution times of the trigger operation. At this time, the setting operation includes a trigger operation acting on the sequence adjustment control.

Correspondingly, the cleaning sequence of each target sub-working area obtained by the electronic device is obtained after the user triggers the sequence adjustment control.

Optionally, the sequence adjustment control includes: sequence up control and sequence down control. When the trigger operation on the sequence up control is received, the cleaning sequence of the corresponding target sub-working area is up-regulated. The increased value is positively correlated with the number of executions of the trigger operation. When the trigger operation on the sequence down control is received, the cleaning sequence of the corresponding target sub-working area is down-regulated. The decreased value is positively correlated with the number of executions of the trigger operation.

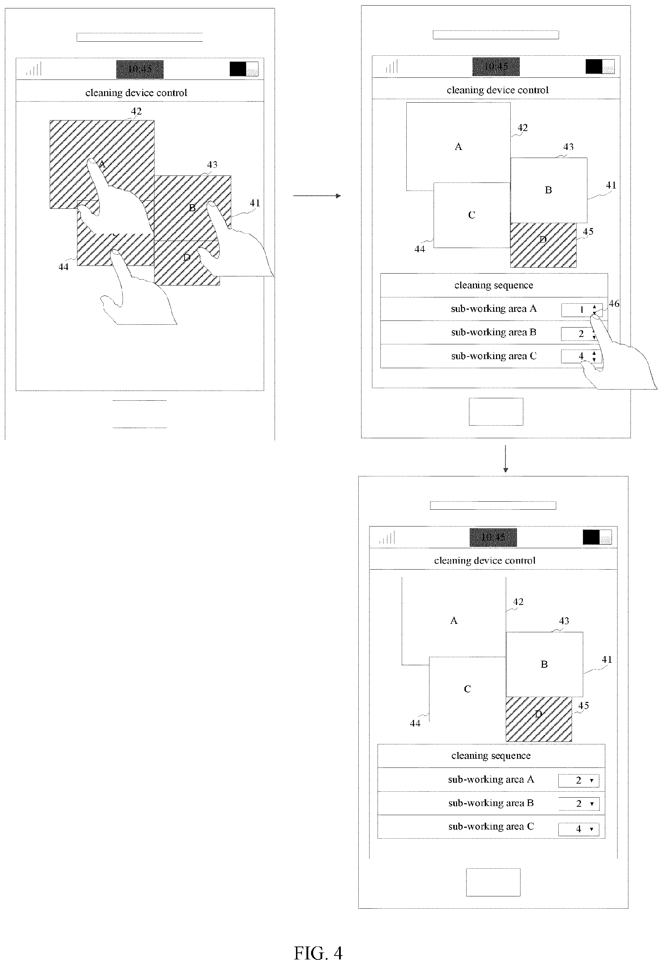

Referring to FIG. 4, take the image of the working area as a room image 41 as an example. In the room image 41, the images 42, 43, 44, 45 of each sub-working area are displayed in sections. The electronic device receives the user's selection operation on the images 42, 43, 44 of the sub-working areas so as to obtain the target sub-working area. The electronic device displays the image of the target sub-working area in a preset display mode, and displays the area information of the target sub-working area. In the display area of each area information, there are displayed a sequence up control and a sequence down control. The electronic device receives a trigger operation on the sequence down control 46 corresponding to the area information of the image 42 acting on the target sub-working area, and determines that the cleaning sequence of the image 42 of the target sub-working area is 2.

A third scenario: receiving the drag operation acting on the information of each area. After the drag operation is over, the sequence of the information of each area is the cleaning sequence of the cleaning device. At this time, the setting operation includes a drag operation.

Correspondingly, the cleaning sequence of each target sub-working area obtained by the electronic device is obtained after the user drags the area information.

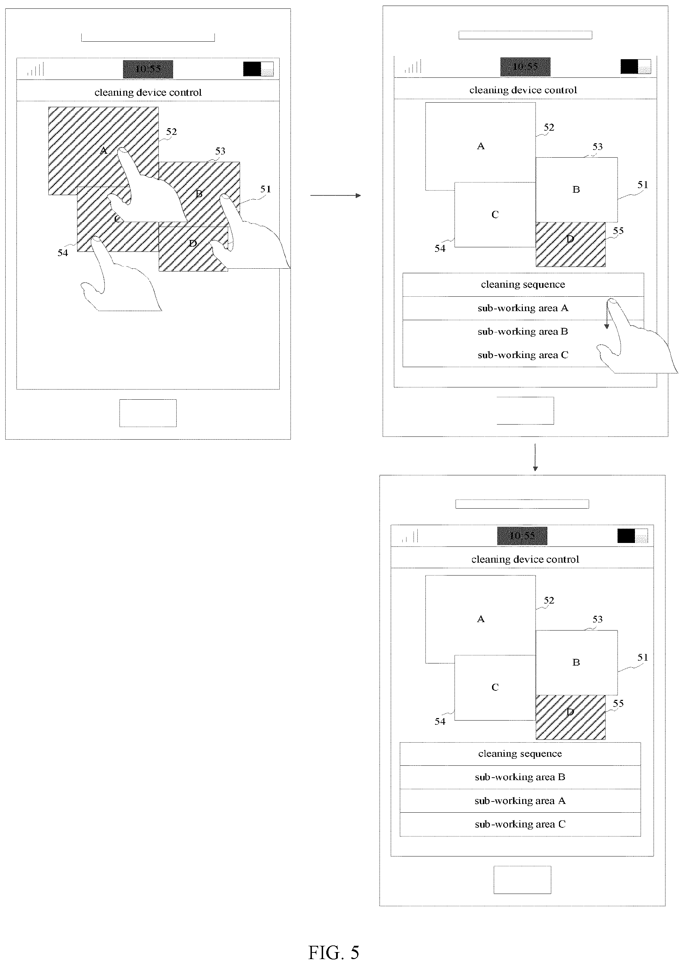

Referring to FIG. 5, take the image of the working area as a room image 51 as an example. In the room image 51, the images 52, 53, 54, 55 of the each sub-working area are displayed in sections. The electronic device receives the user's selection operation on the images 52, 53, 54 of the sub-working area to obtain the target sub-working area. The electronic device displays the image of the target sub-working area in a preset display mode, and displays the area information of the target sub-working area. The electronic device receives the drag operation acting on the area information of the image 52 of the target sub-working area. The drag operation drags the area information to the second position of each area information, and it is determined that the cleaning sequence of the image 52 of the target sub-working area is 2.

Optionally, the user can also adjust the cleaning sequence of the images of the sub-working areas whose sequence has been set. At this time, after receiving the cleaning trajectory drawing operation or the setting operation, the electronic device will also display the cleaning sequence of the images of the sub-working areas whose sequence has been set. The sequence adjustment operation for the cleaning sequence is received, and the adjusted cleaning sequence is displayed.

Receiving the sequence adjustment operation for the cleaning sequence, includes: for the area information of the image of each sub-working area that has set the sequence, displaying the corresponding top control and/or bottom control based on the display position of the area information; and receiving the trigger operation acting on the top control and/or the bottom control. At this time, the setting operation includes a trigger operation acting on the top control and/or the bottom control.

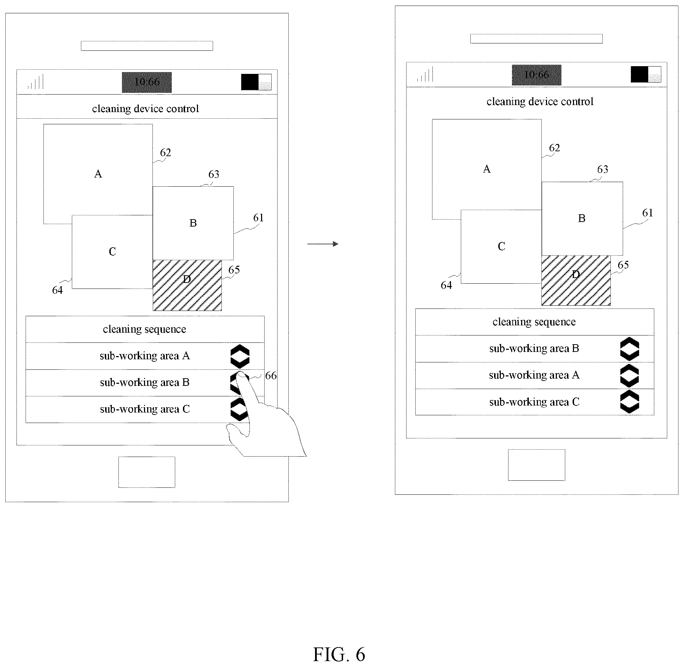

Referring to FIG. 6, take the image of the working area as a room image 61 as an example. In the room image 61, images 62, 63, 64, 65 of each sub-working area are displayed in sections. The electronic device receives the user's selection operation on the images 62, 63, 64 of the sub-working area so as to obtain the target sub-working area. The electronic device displays the image of the target sub-working area in a preset display mode, and displays the area information of the target sub-working area. After the electronic device receives the setting operation of the area information, if it receives the trigger operation on the top control 66 corresponding to the area information of the image 62 of the target sub-working area, it determines that the cleaning sequence of the image 62 of the target sub-working area is 1.

Optionally, after receiving the cleaning trajectory drawing operation or the setting operation, the electronic device may also display the cleaning sequence of the images of the sub-working areas whose sequence has been set. And, the deletion operation of the cleaning sequence of the image of the sub-working area for which the sequence has been set is received.

After the cleaning sequence of the images of the sub-working areas with the set sequence is deleted, the electronic device no longer controls the cleaning device to clean the corresponding sub-working areas, or the sub-working area whose cleaning sequence is deleted is the last cleaning by default. Or, do not clean the sub-working areas for which the cleaning sequence is not selected; or, for the sub-working area that has not selected the cleaning sequence, the default is the last cleaning.

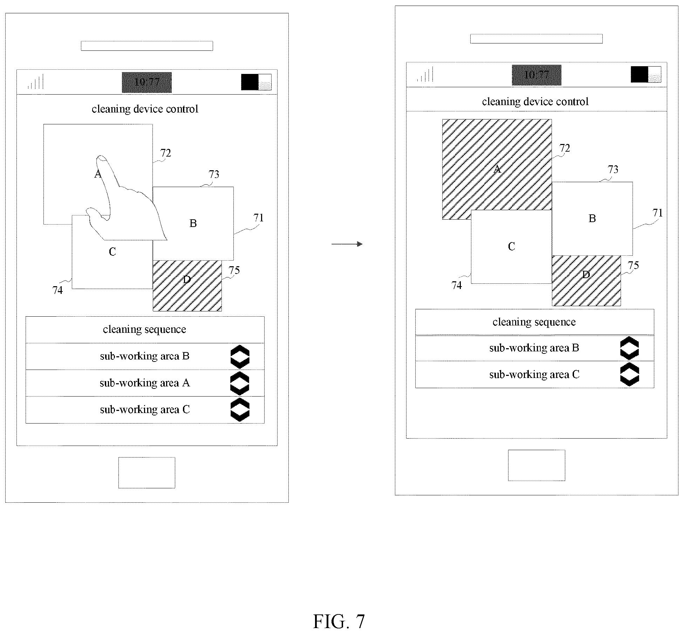

Referring to FIG. 7, take the image of the working area as a room image 71 as an example. In the room image 71, images 72, 73, 74, 75 of each sub-working area are displayed in sections. The electronic device receives the user's selection operation on the images 72, 73, 74 of the sub-working area to obtain the target sub-working area. The electronic device displays the image of the target sub-working area in a preset display mode, and displays the area information of the target sub-working area. After the electronic device receives the setting operation of the area information, if it receives a trigger operation (that is, a deletion operation) acting on the image 72 of the target sub-working area, the cleaning sequence of the image 72 of the target sub-working area is deleted.

In addition, after receiving the cleaning trajectory drawing operation or the setting operation, the electronic device will also receive the operation of adding the image of the sub-working area. The adding operation is the same as the description of obtaining the area information of the target sub-working area in the second cleaning solution, which will not be repeated here in this embodiment.

Optionally, for the image of each sub-working area in the image of the working area, if the images of the sub-working areas have been selected by the user, the images of the sub-working areas are in a non-selectable state. That is, it is not displayed in a preset display mode. If the images of the sub-working areas are not selected by the user, the images of the sub-working areas are in a selectable state. That is, it is displayed in a preset display mode.

Step 103: displaying the cleaning path corresponding to the cleaning sequence, so as to control the cleaning device to clean in the working area according to the cleaning path.

The cleaning path sequentially passes through the corresponding sub-working areas according to the cleaning sequence. Optionally, the cleaning path is generated by the electronic device based on the shortest path principle or the shortest time principle. This embodiment does not limit the generation rule of the cleaning path.

After the electronic device obtains the cleaning path, the cleaning path is sent to the cleaning device, so that the cleaning device cleans in the working area according to the cleaning path. At this time, the cleaning device will also work in accordance with the cleaning sequence.

In summary, the method for obtaining the cleaning path of the cleaning device provided in this embodiment can solve the problem that the mobile terminal cannot provide a path for the cleaning device to clean the room, by displaying an image of a working area of the cleaning device, the image of the working area including a plurality of images of sub-working areas; receiving a sequence setting operation acting on the images of the sub-working areas; obtaining a cleaning sequence indicated by the sequence setting operation; and displaying the cleaning path corresponding to the cleaning sequence so as to control the cleaning device to clean in the working area according to the cleaning path. Since the cleaning sequence desired by the user can be obtained, and the cleaning path can be generated according to the cleaning sequence, the effect of providing the user with a cleaning device to clean the room can be achieved.

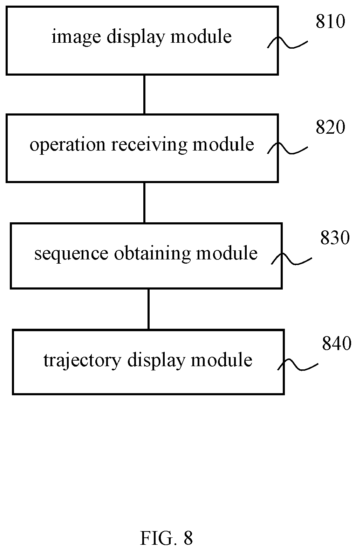

In addition, since the cleaning sequence can be customized and adjusted by the user, the correspondingly generated cleaning path can also be customized, which improves the flexibility of generating the cleaning path. FIG. 8 is a block diagram of a device for obtaining a cleaning path of a cleaning device provided by an embodiment of the present application. The device includes at least the following modules: an image display module 810, an operation receiving module 820, a sequence obtaining module 830, and a trajectory display module 840.

The image display module 801 is used to display an image of a working area of the cleaning device. The image of the working area includes a plurality of images of sub-working areas.

The operation receiving module 820 is used to receive a sequence setting operation acting on the images of the sub-working areas.

The sequence obtaining module 830 is used to obtain a cleaning sequence indicated by the sequence setting operation.

The trajectory display module 840 is used to display the cleaning path corresponding to the cleaning sequence, so as to control the cleaning device to clean in the working area according to the cleaning path.

For related details, refer to the above method embodiment.

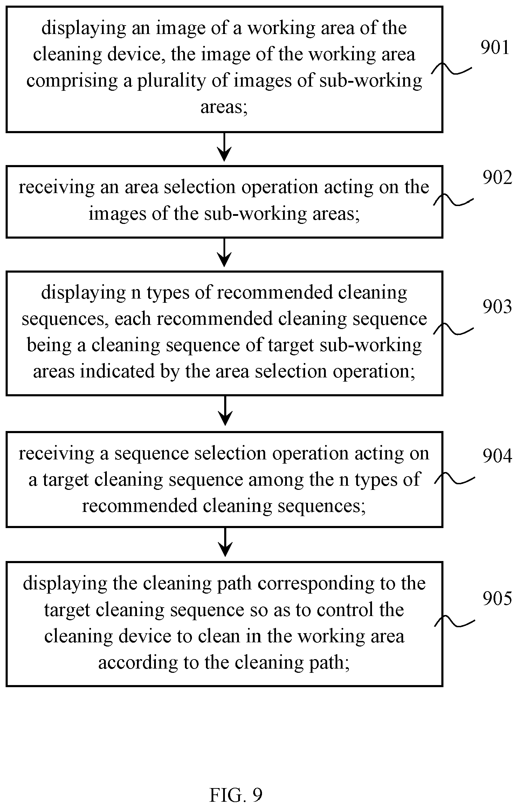

In another embodiment, a method for obtaining a cleaning path of a cleaning device of another cleaning device is provided. FIG. 9 is a flowchart of a method for obtaining a cleaning path of a cleaning device provided by another embodiment of the present application. The method includes at least the following steps:

Step 901: displaying an image of a working area of the cleaning device, and the image of the working area includes images of a plurality of sub-working areas.

The image of the working area refers to an image of a working area that the cleaning device controlled by the electronic device needs to clean. The image of the working area is pre-stored in the electronic device. In other embodiments, the working area image may also be referred to as a working map, a room map etc. This embodiment does not limit the name of the image of the working area.

In the present application, the image of the working area includes a plurality of images of sub-working areas. Each image of sub-working area is an image corresponding to a part of the working area. For example, if the image of the working area is a room, the images of the sub-working areas may include images of a first bedroom, a second bedroom, a dining room, a balcony, etc., in the room.

The sub-working areas in the working area may be divided by the user; or automatically generated by the electronic device. This embodiment does not limit the way of dividing the sub-working areas.

In addition, the image of the working area can be a two-dimensional image (for example: a top view of a room) or a three-dimensional image. This embodiment does not limit the presentation form of the image of the working area.

Optionally, the electronic device displays a partition display control of the image of the working area on the display interface. When a trigger operation acting on the partition display control is received, the image of the sub-working areas are partitioned and displayed in the image of the working area.

Step 902: receiving an area selection operation of the images acting on the sub-working areas.

Optionally, the area a selection operation acting on the images of the plurality of sub-working areas include but are not limited to: single-click operations, double-click operations, long-press operations, etc. The present embodiment does not limit the manner of the area selection operations.

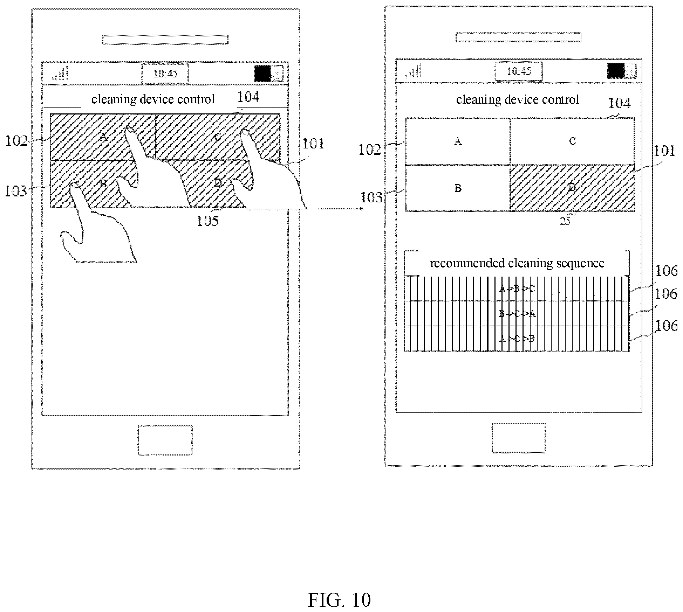

Optionally, when the electronic device allows the user to operate the image of the sub-working area, the images of the sub-working areas are displayed in the first display mode to prompt the corresponding images of the sub-working areas to be operated. For example, the images of the sub-working areas are shown in the diagonally shaded area in FIG. 10. Optionally, the first display mode includes but is not limited to: display in a specific color and/or a specific pattern. This embodiment does not limit the first display mode. If the electronic device receives an area selection operation acting on the images of the sub-working areas, the images of the corresponding sub-working areas are updated to not allow the user to operate on the images of the sub-working areas. At this time, the images of the sub-working areas are not displayed in the first display mode.

Referring to FIG. 10, take the image of the working area as a room image 101 as an example. In the room image 101, the images 102, 103, 104, 105 of each sub-working area are displayed in sections. The electronic device receives the user's area selection operation on the images 102, 103, 104 of the sub-working areas to obtain the target sub-working area. The target sub-working area is no longer displayed in the first display mode.

Step 903, displaying n types of recommended cleaning sequences. Each recommended cleaning sequence is the cleaning sequence of the target sub-working area indicated by the area selection operation. A value of n is a positive integer.

The target sub-working area indicated by the area selection operation refers to the sub-working area corresponding to the images of the sub-working areas that the area selection operation acts on.

The value of n is determined based on the number of target sub-working areas. In an example, if the number of target sub-working areas is 1, the value of n is 1. If the number of target sub-working areas is 2, the value of n is 2. If the number of target sub-working areas is greater than 2, the value of n is a preset value. The preset value is less than or equal to the maximum number of cleaning sequences of the target sub-working area, for example, the value of n is 3, 4, 5, and so on. Of course, in other embodiments, the value of n can also be set in other ways, which will not be listed in this embodiment one by one.

Before displaying the n types of recommended cleaning sequences, the electronic device needs to generate n types of recommended cleaning sequences for the target sub-working area based on a preset sequence generation strategy.

Optionally, the electronic device generating n types of recommended cleaning sequences, includes but not limited to at least one of the following methods:

A first type: determining cleaning time of the target sub-working areas under different cleaning sequences; and determining α cleaning sequences with shortest cleaning time in each cleaning sequence as the recommended cleaning sequence, a value of α being a positive integer, and α≤n.

For example, if the target sub-working areas are the sub-working area A corresponding to the image 102 of the sub-working area in FIG. 10, the sub-working area B corresponding to the image 103 of the sub-working area, and the sub-working area C corresponding to the image 104 of the sub-working area, then cleaning sequences of the target sub-working areas include six types:
sub-working area A->sub-working area B->sub-working area C;
sub-working area A->sub-working area C->sub-working area B;
sub-working area B->sub-working area C->sub-working area A;
sub-working area B->sub-working area A->sub-working area C;
sub-working area C->sub-working area B->sub-working area A;
sub-working area C->sub-working area A->sub-working area B.

The electronic device stores movement parameters such as the movement speed and turning speed of the cleaning device; generates the cleaning path corresponding to each cleaning sequence; combines the movement parameters and the cleaning path to calculate the cleaning time corresponding to each cleaning sequence, and the cleaning time is sorted from shortest to longest; and determines the cleaning sequence ranked in the top a as the recommended cleaning sequence.

A second type: determining cleaning time of the target sub-working areas under different cleaning sequences; and determining b cleaning sequences with shortest cleaning path in each cleaning sequence as the recommended cleaning sequence, a value of b being a positive integer, and b≤n.

For example, if the target sub-working areas are the sub-working area A corresponding to the image 102 of the sub-working area in FIG. 10, the sub-working area B corresponding to the image 103 of the sub-working area, and the sub-working area C corresponding to the image 104 of the sub-working area, then cleaning sequences of the target sub-working areas include six types:
sub-working area A->sub-working area B->sub-working area C;
sub-working area A->sub-working area C->sub-working area B;
sub-working area B->sub-working area C->sub-working area A;
sub-working area B->sub-working area A->sub-working area C;
sub-working area C->sub-working area B->sub-working area A;
sub-working area C->sub-working area A->sub-working area B.

The electronic device generates a cleaning path corresponding to each cleaning sequence based on the shortest path principle; sorts the cleaning paths from shortest to longest; and determines the cleaning sequence with the top b rank as the recommended cleaning sequence.

A third type: determining historical cleaning sequences and historical cleaning times of the target sub-working areas; and generating the recommended cleaning sequence based on the historical cleaning sequences and the historical cleaning times.

In one example, it includes obtaining frontmost cleaning sequences in the historical cleaning sequences of target sub-working areas; sorting the target sub-working areas from front to back according to the frontmost cleaning sequences; for the target sub-working areas with the same sort sequence, sorting them according to sequence of historical cleaning times from most to least; and determining an obtained sort sequence as the recommended cleaning sequence.

For example, if the target sub-working areas are the sub-working area A corresponding to the image 102 of the sub-working area in FIG. 10, the sub-working area B corresponding to the image 103 of the sub-working area, and the sub-working area C corresponding to the image 104 of the sub-working area, refer to Table 1 for the historical cleaning sequences and historical cleaning times of each target sub-working area. According to Table 1, the frontmost cleaning sequence of sub-working area A and sub-working area C is 1, and the frontmost cleaning sequence of sub-working area B is 2, at this time the sorting result is (A, C) -> B. After that, the sub-working area A and the sub-working area C are sorted again according to the historical cleaning times. The historical cleaning times of the sub-working area A are greater than the historical cleaning times of the sub-working area C, and the sorting result is A->C->B. At this time, the recommended cleaning sequence includes A->C->B.

**Table 1:**

| target sub-working area | historical cleaning sequence(s) | historical cleaning time(s) |
|---|---|---|
| sub-working area A | 1 | 2 |
| | 2 | 2 |
| sub-working area B | 2 | 3 |
| sub-working area C | 1 | 1 |
| | 2 | 2 |
| | 3 | 1 |

Of course, the electronic device may also generate a recommended cleaning sequence based on the historical cleaning sequences and the historical cleaning times in other ways. For example: obtaining an average sequence value of the historical cleaning sequences of the target sub-working area; and sorting the average sequence value from front to back to obtain the recommended cleaning sequence.

In addition, the electronic device may also generate the recommended cleaning sequence by randomly selecting the cleaning sequence, etc. The present embodiment does not limit the manner in which the electronic device generates the recommended cleaning sequence.

With reference to FIG. 10, the description is given by taking n=3 as an example. After the electronic device receives the area selection operations on the images 102, 103, and 104 acting on the sub-working areas, it displays three recommended cleaning sequences 26.

Step 904: receiving a sequence selection operation acting on the target cleaning sequence among the n types of recommended cleaning sequences.

Optionally, when the electronic device allows the user to operate the recommended cleaning sequence, the recommended cleaning sequence is displayed in the second display mode to prompt that the corresponding recommended cleaning sequence supports being operated. For example: the images of the sub-working areas are shown in the shaded part of the vertical line in FIG. 2. Optionally, the second display mode is the same as or different from the first display mode. The second display mode includes but is not limited to: displaying in a specific color and/or a specific pattern. This embodiment does not limit the second display mode. If the electronic device receives a sequence selection operation acting on the recommended cleaning sequence, at this time, the recommended cleaning sequence is not displayed in the second display mode.

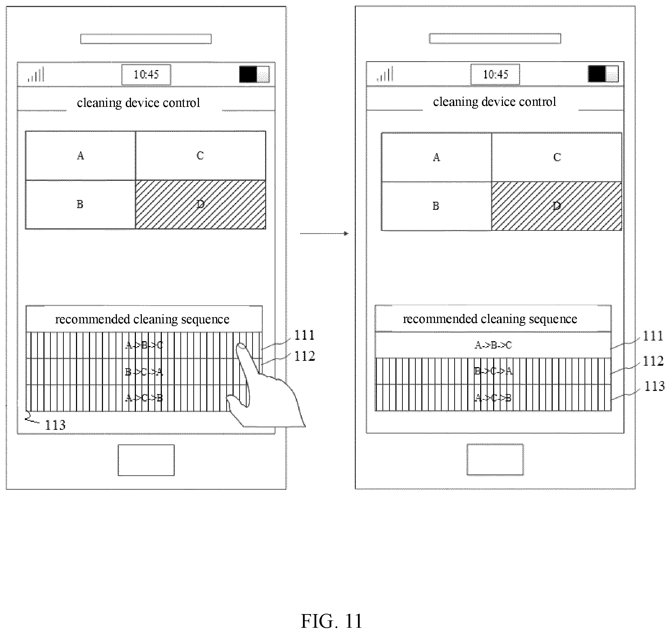

Referring to FIG. 11, the description is given by taking n=3 as an example. The electronic device shows that there are three recommended cleaning sequences 111, 112, and 113. After that, the electronic device receives a sequence selection operation acting on the recommended cleaning sequence 111. The recommended cleaning sequence 111 is the target cleaning sequence. At this time, the recommended cleaning sequence 111 is no longer displayed in the second display mode.

Optionally, after the electronic device receives the sequence selection operation, it may also display the ranking value of each target sub-working area in the target cleaning sequence based on the position of the image of the target sub-working area. For example: in FIG. 11, the target cleaning sequence is sub-working area A->sub-working area B->sub-working area C. The sort value 1 of the sub-working area A is displayed in the image of the sub-working area. The sort value 2 of the sub-working area A is displayed in the image of the sub-working area. The sort value 3 of the sub-working area A is displayed in the image of the sub-working area.

Step 905: displaying the cleaning path corresponding to the target cleaning sequence so as to control the cleaning device to clean in the working area according to the cleaning path.

The cleaning path sequentially passes through the corresponding sub-working areas according to the cleaning sequence. Before displaying the cleaning path corresponding to the target cleaning sequence, the electronic device needs to generate the cleaning path corresponding to the target cleaning sequence based on the path generation strategy. Among them, the path generation strategy is: the shortest path strategy, the shortest time-consuming strategy or the random generation strategy. This embodiment does not limit the type of path generation strategy.

After the electronic device obtains the cleaning path, the cleaning path is sent to the cleaning device, so that the cleaning device cleans in the working area according to the cleaning path. At this time, the cleaning device will also work in accordance with the cleaning sequence.

In summary, the method for obtaining the cleaning path of the cleaning device provided in this embodiment can solve the problem that the mobile terminal cannot provide the sequential path for the cleaning device to clean the room, by displaying an image of a working area of the cleaning device, the image of the working area including a plurality of images of sub-working areas; receiving an area selection operation acting on the images of the sub-working areas; displaying n types of recommended cleaning sequences, each recommended cleaning sequence being a cleaning sequence of target sub-working areas indicated by the area selection operation, a value of n being a positive integer; receiving a sequence selection operation acting on a target cleaning sequence among the n types of recommended cleaning sequences; and displaying the cleaning path corresponding to the target cleaning sequence so as to control the cleaning device to clean in the working area according to the cleaning path; the present application can solve the problem that the mobile terminal cannot provide a sequential path for the cleaning device to clean the room. Since the cleaning sequence can be recommended to the user, and the cleaning path can be generated according to the cleaning sequence selected by the user, the present application can achieve the effect of providing the user with a cleaning device to clean the room.

In addition, by generating n types of recommended cleaning sequences of the target sub-working area based on a preset sequence generation strategy, a recommended cleaning sequence that meets the user's expectations can be generated, without the user having to manually input the cleaning sequence, thereby the efficiency of generating the cleaning sequence is improved.

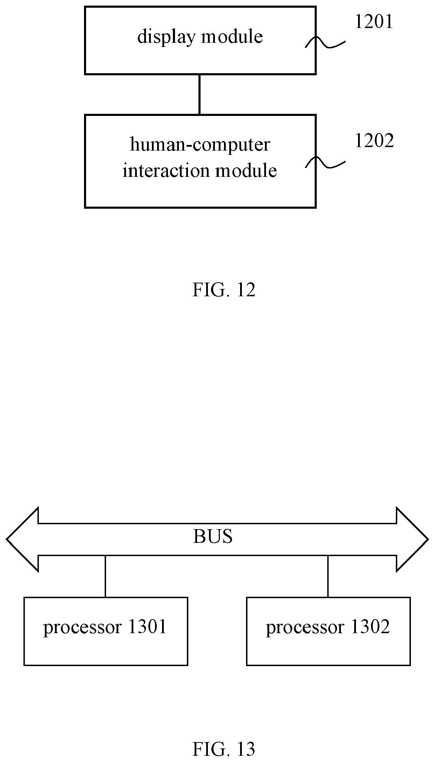

FIG. 12 is a block diagram of a cleaning path obtaining device of a cleaning device provided by an embodiment of the present application. The device includes at least the following modules: a display module 1201 and a human-computer interaction module 1202.

The display module 1201 is used to display an image of a working area of the cleaning device, the image of the working area includes a plurality of images of sub-working areas.

The human-computer interaction module 1202 is used to receive an area selection operation acting on the images of the sub-working areas.

The display module 1201 is also used to display n types of recommended cleaning sequences. Each recommended cleaning sequence is a cleaning sequence of target sub-working areas indicated by the area selection operation, and a value of n is a positive integer.

The human-computer interaction module 1202 is further used to receive a sequence selection operation acting on a target cleaning sequence among the n types of recommended cleaning sequences.

The display module 1201 is also used to display the cleaning path corresponding to the target cleaning sequence, so as to control the cleaning device to clean in the working area according to the cleaning path.

It should be noted that when the device for obtaining the cleaning path of the cleaning device provided in the foregoing embodiment performs the obtaining of the cleaning path of the cleaning device, only the division of the foregoing functional modules is used for illustration. In practical applications, the above-mentioned functions can be allocated by different functional modules as required. That is, the internal structure of the device for obtaining the cleaning path of the cleaning device is divided into different functional modules to complete all or part of the functions described above. In addition, the apparatus for obtaining a cleaning path of a cleaning device provided in the foregoing embodiment belongs to the same concept as the embodiment of a method for obtaining a cleaning path of a cleaning device. For the specific implementation process, please refer to the method embodiment, which will not be repeated here. FIG. 13 is a block diagram of a device for obtaining a cleaning path of a cleaning device provided by an embodiment of the present application. The device includes at least a processor 1301 and a memory 1302.

The processor 1301 may include one or more processing cores, such as a 4-core processor, an 8-core processor, and so on. The processor 1301 may adopt at least one hardware form of DSP (Digital Signal Processing), FPGA (Field-Programmable Gate Array), and PLA (Programmable Logic Array). The processor 1301 may also include a main processor and a co-processor. The main processor is a processor used to process data in the awake state, and is also called a CPU (Central Processing Unit). The co-processor is a low-power processor used to process data in the standby state. In some embodiments, the processor 1301 may be integrated with a GPU (Graphics Processing Unit, image processor). The GPU is used to render and draw the content that needs to be displayed on the display screen. In some embodiments, the processor 1301 may further include an AI (Artificial Intelligence) processor. The AI processor is used to process computing operations related to machine learning.

The memory 1302 may include one or more computer-readable storage media. The computer-readable storage medium may be non-transitory. The memory 1302 may also include high-speed random access memory and non-volatile memory, such as one or more magnetic disk storage devices and flash memory storage devices. In some embodiments, the non-transitory computer-readable storage medium in the memory 1302 is used to store at least one instruction. The at least one instruction is used to be executed by the processor 1301 to implement the method for obtaining the cleaning path of the cleaning device provided in the method embodiment of the present application.

In some embodiments, the device for obtaining the cleaning path of the cleaning device may optionally further include: a peripheral device port and at least one peripheral device. The processor 1301, the memory 1302, and the peripheral device port may be connected by a BUS or a signal line. Each peripheral device can be connected to the peripheral device port through the BUS, the signal line or a circuit board. Schematically, peripheral devices include, but are not limited to: radio frequency circuits, touch screens, audio circuits, and power supplies etc.

Of course, the device for obtaining the cleaning path of the cleaning device may also include fewer or more components, which is not limited in this embodiment.

Optionally, the present application also provides a computer-readable storage medium. The computer-readable storage medium stores a program. The program is loaded and executed by the processor to implement the method for obtaining the cleaning path of the cleaning device in the foregoing method embodiment.

Optionally, the present application also provides a computer product. The computer product includes a computer-readable storage medium. The computer-readable storage medium stores a program. The program is loaded and executed by the processor to implement the method for obtaining the cleaning path of the cleaning device in the foregoing method embodiment.

The technical features of the above-mentioned embodiments can be combined arbitrarily. In order to make the description concise, all possible combinations of the various technical features in the foregoing embodiments are not described. However, as long as there is no contradiction in the combination of these technical features, it should be regarded as the scope described in this specification.

The above-mentioned embodiments only express several embodiments of the present application, and the description is relatively specific and detailed, but it should not be understood as a limitation on the scope of the present application. It should be noted that for those of ordinary skill in the art, without departing from the concept of the present application, several modifications and improvements can be made, and these all fall within the protection scope of the present application. Therefore, the protection scope of the disclosed patent should be subject to the appended claims.

## Claims

1. A method for obtaining a cleaning path of a cleaning device, the method comprising:
displaying an image of a working area of the cleaning device, the image of the working area comprising a plurality of images of sub-working areas;
receiving a sequence setting operation acting on the images of the sub-working areas;
obtaining a cleaning sequence indicated by the sequence setting operation; and
displaying the cleaning path corresponding to the cleaning sequence so as to control the cleaning device to clean in the working area according to the cleaning path.

2. The method according to claim 1, wherein
receiving the sequence setting operation acting on the images of the sub-working areas, comprises:
receiving a cleaning trajectory drawing operation acting on the image of the working area; and
displaying a cleaning trajectory indicated by the cleaning trajectory drawing operation is displayed on the image of the working area; and wherein
obtaining the cleaning sequence indicated by the sequence setting operation, comprises:
determining a sequence of the cleaning trajectory passing through the image of each sub-working area as the cleaning sequence of the cleaning device.

3. The method according to claim 1, wherein
receiving the sequence setting operation acting on the images of the sub-working areas, comprises:
receiving a selection operation acting on the plurality of imaged of the sub-working areas;
displaying area information of target sub-working areas indicated by the selection operation; and
receiving the setting operation of each area information; and wherein
obtaining the cleaning sequence indicated by the sequence setting operation, comprises:
obtaining the cleaning sequence of target sub-working areas corresponding to the each area information indicated by the setting operation.

4. The method according to claim 3, wherein receiving the setting operation of each area information, comprises:
for each area information, displaying a corresponding sequence selection window based on a display position of the area information; the sequence selection window being used to display a selectable cleaning sequence of the target sub-working areas corresponding to the area information; and
receiving a sequence selection operation acting on the sequence selection window.

5. The method according to claim 3, wherein receiving the setting operation of each area information, comprises:
for each area information, displaying a corresponding sequence adjustment control based on the display position of the area information; and
receiving a trigger operation acting on the sequence adjustment control, the sequence adjustment control being used to determine the cleaning sequence of corresponding target sub-working areas based on the number of executions of the trigger operation.

6. The method according to claim 3, wherein receiving the setting operation of each area information, comprises:
receiving a drag operation acting on each area information; and wherein after the drag operation is completed, a sequence of the area information is the cleaning sequence of the cleaning device.

7. The method according to any one of claims 1 to 6, wherein receiving the sequence setting operation acting on the images of the sub-working areas, comprises:
displaying the cleaning sequence of the images of the sub-working areas which have been sequenced; and
receiving a sequence adjustment operation of the cleaning sequence, and displaying the cleaning sequence after being adjusted; and/or, receiving a deletion operation for the cleaning sequence of the images of the sub-working areas in the set sequence.

8. A device for obtaining a cleaning path of a cleaning device, the device comprising:
an image display module, the image display module being used to display an image of a working area of the cleaning device, the image of the working area comprising a plurality of images of sub-working areas;
an operation receiving module, the operation receiving module being used to receive a sequence setting operation acting on the images of the sub-working areas;
a sequence obtaining module, the sequence obtaining module being used to obtain a cleaning sequence indicated by the sequence setting operation; and
a trajectory display module, the trajectory display module being used to display the cleaning path corresponding to the cleaning sequence, so as to control the cleaning device to clean in the working area according to the cleaning path.

9. A device for obtaining a cleaning path of a cleaning device, wherein the device comprises a processor and a memory in which a program is stored; and wherein the program is loaded and executed by the processor to implement a method for obtaining the cleaning path of the cleaning device according to any one of claims 1 to 7.

10. A computer-readable storage medium, wherein a program is stored in the storage medium; and wherein when the program is executed by a processor, the program is used to implement a method for obtaining the cleaning path of the cleaning device according to any one of claims 1 to 7.

11. A method for obtaining a cleaning path of a cleaning device, the method comprising:
displaying a partition display control, and receiving a trigger operation acting on the partition display control;
displaying an image of a working area of the cleaning device, the image of the working area comprising a plurality of images of sub-working areas;
receiving a sequence setting operation acting on the images of the sub-working areas;
obtaining a cleaning sequence indicated by the sequence setting operation; and
displaying the cleaning path corresponding to the cleaning sequence so as to control the cleaning device to clean in the working area according to the cleaning path;
wherein receiving the sequence setting operation acting on the images of the sub-working areas, comprises:
receiving a selection operation acting on the plurality of imaged of the sub-working areas;
displaying area information of target sub-working areas indicated by the selection operation.

12. The method according to claim 11, wherein
receiving the sequence setting operation acting on the images of the sub-working areas, comprises:
receiving a cleaning trajectory drawing operation acting on the image of the working area; and
displaying a cleaning trajectory indicated by the cleaning trajectory drawing operation is displayed on the image of the working area; and wherein
obtaining the cleaning sequence indicated by the sequence setting operation, comprises: determining a sequence of the cleaning trajectory passing through the image of each sub-working area as the cleaning sequence of the cleaning device.

13. The method according to claim 11, wherein
receiving the sequence setting operation acting on the images of the sub-working areas, comprises:
receiving a selection operation acting on the plurality of imaged of the sub-working areas;
displaying area information of target sub-working areas indicated by the selection operation; and
receiving the setting operation of each area information; and wherein
obtaining the cleaning sequence indicated by the sequence setting operation, comprises:
obtaining the cleaning sequence of target sub-working areas corresponding to the each area information indicated by the setting operation.

14. The method according to claim 13, wherein receiving the setting operation of each area information, comprises:
for each area information, displaying a corresponding sequence selection window based on a display position of the area information; the sequence selection window being used to display a selectable cleaning sequence of the target sub-working areas corresponding to the area information; and
receiving a sequence selection operation acting on the sequence selection window.

15. The method according to claim 13, wherein receiving the setting operation of each area information, comprises:
for each area information, displaying a corresponding sequence adjustment control based on the display position of the area information; and
receiving a trigger operation acting on the sequence adjustment control, the sequence adjustment control being used to determine the cleaning sequence of corresponding target sub-working areas based on the number of executions of the trigger operation.

16. The method according to claim 13, wherein receiving the setting operation of each area information, comprises:
receiving a drag operation acting on each area information; and wherein after the drag operation is completed, a sequence of the area information is the cleaning sequence of the cleaning device.

17. The method according to any one of claims 11 to 16, wherein receiving the sequence setting operation acting on the images of the sub-working areas, comprises:
displaying the cleaning sequence of the images of the sub-working areas which have been sequenced; and
receiving a sequence adjustment operation of the cleaning sequence, and displaying the cleaning sequence after being adjusted; and/or, receiving a deletion operation for the cleaning sequence of the images of the sub-working areas in the set sequence.

18. A device for obtaining a cleaning path of a cleaning device, the device comprising:
an image display module, the image display module being used to display an image of a working area of the cleaning device, the image of the working area comprising a plurality of images of sub-working areas;
an operation receiving module, the operation receiving module being used to receive a sequence setting operation acting on the images of the sub-working areas;
a sequence obtaining module, the sequence obtaining module being used to obtain a cleaning sequence indicated by the sequence setting operation; and
a trajectory display module, the trajectory display module being used to display the cleaning path corresponding to the cleaning sequence, so as to control the cleaning device to clean in the working area according to the cleaning path.

19. A device for obtaining a cleaning path of a cleaning device, wherein the device comprises a processor and a memory in which a program is stored; and wherein the program is loaded and executed by the processor to implement a method for obtaining the cleaning path of the cleaning device according to any one of claims 11 to 17.

20. A computer-readable storage medium, wherein a program is stored in the storage medium; and wherein when the program is executed by a processor, the program is used to implement a method for obtaining the cleaning path of the cleaning device according to any one of claims 11 to 17.

21. A method for obtaining a cleaning path of a cleaning device, the method comprising:
displaying an image of a working area of the cleaning device, the image of the working area comprising a plurality of images of sub-working areas;
receiving an area selection operation acting on the images of the sub-working areas;
displaying n types of recommended cleaning sequences, each recommended cleaning sequence being a cleaning sequence of target sub-working areas indicated by the area selection operation, a value of n being a positive integer;
receiving a sequence selection operation acting on a target cleaning sequence among the n types of recommended cleaning sequences; and
displaying the cleaning path corresponding to the target cleaning sequence so as to control the cleaning device to clean in the working area according to the cleaning path.

22. The method according to claim 21, wherein before displaying the n types of recommended cleaning sequences, the method further comprises:
generating n types of recommended cleaning sequences for the target sub-working areas based on a preset sequence generation strategy.

23. The method according to claim 22, wherein generating the n types of recommended cleaning sequences for the target sub-working areas based on the preset sequence generation strategy, comprises:
determining cleaning time of the target sub-working areas under different cleaning sequences; and
determining α cleaning sequences with shortest cleaning time in each cleaning sequence as the recommended cleaning sequence, a value of α being a positive integer, and α≤n.

24. The method according to claim 22, wherein generating the n types of recommended cleaning sequences for the target sub-working areas based on the preset sequence generation strategy, comprises:
determining cleaning paths of the target sub-working areas under different cleaning sequences; and
determining b cleaning sequences with shortest cleaning path in each cleaning sequence as the recommended cleaning sequence, a value of b being a positive integer, and b≤n.

25. The method according to claim 22, wherein generating n types of recommended cleaning sequences for the target sub-working areas based on a preset sequence generation strategy, comprises:
determining historical cleaning sequences and historical cleaning times of the target sub-working areas; and
generating the recommended cleaning sequence based on the historical cleaning sequences and the historical cleaning times.

26. The method according to claim 25, wherein generating the recommended cleaning sequence based on the historical cleaning sequences and the historical cleaning times, comprises:
obtaining frontmost cleaning sequences in the historical cleaning sequences of target sub-working areas;
sorting the target sub-working areas from front to back according to the frontmost cleaning sequences;
for the target sub-working areas with the same sort sequence, sorting them according to sequence of historical cleaning times from most to least; and
determining an obtained sort sequence as the recommended cleaning sequence.

27. The method according to any one of claims 21 to 26, wherein before displaying the cleaning path corresponding to the target cleaning sequence, the method further comprises:
generating a cleaning path corresponding to the target cleaning sequence based on a path generation strategy; and
wherein the path generation strategy is a strategy with the shortest path, a strategy with the shortest time-consuming, or a strategy randomly generated.

28. A device for obtaining a cleaning path of a cleaning device, the device comprising:
a display module, the display module being used to display an image of a working area of the cleaning device, the image of the working area comprising a plurality of images of sub-working areas; and
a human-computer interaction module, the human-computer interaction module being used to receive an area selection operation acting on the images of the sub-working areas;
wherein the display module is also used to display n types of recommended cleaning sequences, each recommended cleaning sequence is a cleaning sequence of target sub-working areas indicated by the area selection operation, and a value of n is a positive integer;
wherein the human-computer interaction module is further used to receive a sequence selection operation acting on a target cleaning sequence among the n types of recommended cleaning sequences; and
wherein the display module is also used to display the cleaning path corresponding to the target cleaning sequence, so as to control the cleaning device to clean in the working area according to the cleaning path.

29. A device for obtaining a cleaning path of a cleaning device, wherein the device comprises a processor and a memory in which a program is stored; and wherein the program is loaded and executed by the processor to implement a method for obtaining the cleaning path of the cleaning device according to any one of claims 21 to 27.

30. A computer-readable storage medium, wherein a program is stored in the storage medium; and wherein when the program is executed by a processor, the program is used to implement a method for obtaining the cleaning path of the cleaning device according to any one of claims 21 to 27.

31. A method for obtaining a cleaning path of a cleaning device, the method comprising:
displaying an image of a working area of the cleaning device, the image of the working area comprising a plurality of images of sub-working areas;
receiving an area selection operation acting on the images of the sub-working areas;
displaying n types of recommended cleaning sequences, each recommended cleaning sequence being a cleaning sequence of target sub-working areas indicated by the area selection operation, a value of n being a positive integer;
receiving a sequence selection operation acting on a target cleaning sequence among the n types of recommended cleaning sequences; and
displaying the cleaning path corresponding to the target cleaning sequence so as to control the cleaning device to clean in the working area according to the cleaning path;
wherein before displaying the n types of recommended cleaning sequences, the method further comprises:
determining historical cleaning sequences and historical cleaning times of the target sub-working areas; and
generating the recommended cleaning sequence based on the historical cleaning sequences and the historical cleaning times.

32. The method according to claim 31, wherein after receiving the sequence selection operation acting on the target cleaning sequence among the n types of recommended cleaning sequences, the method further comprises:
displaying a ranking value of each target sub-working area in the target cleaning sequence based on positions of the images of the target sub-working areas.

33. The method according to claim 31, wherein after receiving the sequence selection operation acting on the target cleaning sequence among the n types of recommended cleaning sequences, the method further comprises:
changing display modes of the n types of recommended cleaning sequences.

34. The method according to claim 31, wherein generating the recommended cleaning sequence based on the historical cleaning sequences and the historical cleaning times, comprises:
obtaining frontmost cleaning sequences in the historical cleaning sequences of target sub-working areas;
sorting the target sub-working areas from front to back according to the frontmost cleaning sequences; and
determining an obtained sort sequence as the recommended cleaning sequence.

35. The method according to claim 31, wherein generating the recommended cleaning sequence based on the historical cleaning sequences and the historical cleaning times, comprises:
obtaining an average sequence value of the historical cleaning sequences of the target sub-working areas;
sorting the average sequence value from front to back; and
determining an obtained sort sequence as the recommended cleaning sequence.

36. The method according to claim 34 or 35, further comprising:
for the target sub-working areas with the same sort sequence, sorting them according to sequence of historical cleaning times from most to least; and
determining an obtained sort sequence as the recommended cleaning sequence.

37. The method according to any one of claims 31 to 36, wherein before displaying the cleaning path corresponding to the target cleaning sequence, the method further comprises:
generating a cleaning path corresponding to the target cleaning sequence based on a path generation strategy; and
wherein the path generation strategy is a strategy with the shortest path, a strategy with the shortest time-consuming, or a strategy randomly generated.

38. A device for obtaining a cleaning path of a cleaning device, the device comprising:
a display module, the display module being used to display an image of a working area of the cleaning device, the image of the working area comprising a plurality of images of sub-working areas; and
a human-computer interaction module, the human-computer interaction module being used to receive an area selection operation acting on the images of the sub-working areas;
wherein the display module is also used to display n types of recommended cleaning sequences, each recommended cleaning sequence is a cleaning sequence of target sub-working areas indicated by the area selection operation, and a value of n is a positive integer;
wherein the human-computer interaction module is further used to receive a sequence selection operation acting on a target cleaning sequence among the n types of recommended cleaning sequences;
wherein the display module is also used to display the cleaning path corresponding to the target cleaning sequence, so as to control the cleaning device to clean in the working area according to the cleaning path;
wherein the device further comprises:
a module for determining historical cleaning sequences and historical cleaning times of the target sub-working areas before displaying the n types of recommended cleaning sequences; and
a module for generating the recommended cleaning sequences based on the historical cleaning sequences and the historical cleaning times.

39. A device for obtaining a cleaning path of a cleaning device, wherein the device comprises a processor and a memory in which a program is stored; and wherein the program is loaded and executed by the processor to implement a method for obtaining the cleaning path of the cleaning device according to any one of claims 31 to 37.

40. A computer-readable storage medium, wherein a program is stored in the storage medium; and wherein when the program is executed by a processor, the program is used to implement a method for obtaining the cleaning path of the cleaning device according to any one of claims 31 to 37.
